# EUROPÄISCHE PATENTSCHRIFT

(11) **EP 2 062 805 B1**
(45) Veröffentlichungstag und Bekanntmachung des Hinweises auf die Patenterteilung: **27.10.2010**
(21) Anmeldenummer: 08013975.1
(22) Anmeldetag: 05.08.2008
(51) Int. Cl.: B62D 25/20

(54) **Karosserieaufbau**
Vehicle body structure
Structure de carrosserie

(30) Priorität: 24.11.2007 DE 102007056673
(43) Veröffentlichungstag der Anmeldung: 27.05.2009
(73) Patentinhaber: Dr. Ing. h.c. F. Porsche AG, 70435 Stuttgart (DE)
(72) Erfinder: Oezkan, Ali, 71229 Leonberg (DE); Bohnert, Klaus, 75417 Muehlacker (DE); Jenisch, Gernot, 71299 Wimsheim (DE)

(56) Entgegenhaltungen:
- DE-A1- 10 212 218
- DE-A1- 19 627 610
- JP-A- 57 201 777
- JP-A- 60 161 275
- JP-A- 62 125 956

## Beschreibung

Die vorliegende Erfindung betrifft einen Karosserieaufbau für ein Kraftfahrzeug mit einer Bodengruppe, die aus einem nach oben konvexen und nach unten offenen Längsmitteltunnel sowie zwei dazu parallelen Seitenschwellern und zwischen dem Längsmitteltunnel und den Seitenschwellern angeordneten Bodenelementen besteht, gemäß dem Oberbegriff des Anspruchs 1.

Aus der DE 102 12 218 B4 ist ein gattungsgemäßer Fahrzeugkarosserieaufbau bekannt, wobei auf der Bodengruppe zur Verbesserung der Steifigkeit der Fahrzeugkarosserie in Fahrzeugquerrichtung ein erstes, ein zweites und ein drittes Querelement vorgesehen sind. Das dritte Querelement bildet zusammen mit einem zusätzlichen Querelement einen in Fahrzeugquerrichtung verlaufenden Hohlquerschnitt, wobei das dritte sowie das zusätzliche Querelement am Längsmitteltunnel, am ersten und am zweiten Querelement sowie an dem zugehörigen Seitenschweller befestigt sind. Die Querelemente bewirken dabei nahezu ausschließlich eine Versteifung des Fahrzeugkarosserieaufbaus in Fahrzeugquerrichtung.

Aus der WO 2007/017198 A1 ist ein Kraftfahrzeug mit einer eine Bodenstruktur aufweisenden Karosserie und wenigstens einem Versteifungselement zum Versteifen der Bodenstruktur bekannt. Das Versteifungselement weist Wellen auf, welche die Bodenstruktur ebenfalls nahezu ausschließlich in Fahrzeugquerrichtung versteifen.

Aus der EP 0 066 963 B1 ist es ebenfalls eine Bodenstruktur eines Kraftfahrzeuges bekannt, bei welcher ein, einen nach oben konvex ausgebildeten und nach unten offenen Längsmitteltunnel querendes Aussteifungselement vorgesehen ist, welches im Bereich von zwei in Fahrzeugquerrichtung verlaufenden Sitzquerträgern angeordnet ist.

Ein ähnliches Aussteifungselement ist auch aus der JP 2005161975 A bekannt.

Weitere ausgesteifte Bodenstrukturen für Kraftfahrzeuge sind beispielsweise aus der KR 1020020081614 A, aus der DE 38 09 185 C2, aus der DE 38 37 231 C2 und aus der DE 24 44 016 bekannt.

Die vorliegende Erfindung beschäftigt sich mit dem Problem, für einen Karosserieaufbau der gattungsgemäßen Art eine verbesserte Ausführungsform anzugeben, mit welcher eine im Vergleich zum Stand der Technik bessere Aussteifung des Karosserieaufbaus erzielt werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Karosserieaufbau für ein Kraftfahrzeug im Bereich einer Bodengruppe durch ein plattenförmiges und auf einem vorderen sowie einem hinteren Sitzquerträger aufliegendes Schubelement auszusteifen und dadurch eine äußerst steife Torsionsbox zu erhalten, welche im wesentlichen durch die beiden sich in Fahrzeugquerrichtung erstreckenden Sitzquerträger, das plattenförmige Schubelement sowie Bodenelemente besteht, auf welchen die beiden Sitzquerträger aufliegen. Generell besteht die Bodengruppe aus einem nach oben konvexen und nach unten offenen Längsmitteltunnels sowie zwei dazu parallelen Seitenschwellern, wobei zwischen dem Längsmitteltunnel und den beiden Seitenschwellern Bodenelemente angeordnet sind, auf welchen die beiden Sitzquerträger aufliegen und fest verbunden sind. Die plattenförmig ausgebildeten Schubelemente sind dabei nicht nur mit einem jeweils oberen Bereich des vorderen bzw. hinteren Sitzquerträgers fest verbunden, sondern können auch an den Längsmitteltunnel sowie den jeweils zugehörigen Seitenschweller angebunden sein. Hierdurch wird ein aus vorderem und hinterem Sitzquerträger, dem zugehörigen Bodenelement sowie dem zugehörigen Schubelement bestehender Hohlquerschnitt geschaffen, welcher die Bodengruppe bzw. den Karosserieaufbau nicht nur in Fahrzeugquerrichtung aussteift, sondern auch in Fahrzeuglängsrichtung bzw. schräg dazu. Insbesondere kann durch eine derartig ausgebildete Versteifungsbox die Torsionssteifigkeit des Kraftfahrzeuges erhöht werden.

Bei einer vorteilhaften Weiterbildung der erfindungsgemäßen Lösung ist im Bereich zwischen den fahrer- und beifahrerseitigen Schubelementen eine Tunnelbrücke vorgesehen, welche den Längsmitteltunnel quert und so zusammen mit den Schubelementen ein vom einen zum anderen Seitenschweller reichendes durchgängiges Schubfeld erzeugt. Der Längsmitteltunnel ist insbesondere in Fahrzeugquerrichtung leicht deformierbar, da er einen im Wesentlichen U-förmigen und nach unten offenen Querschnitt besitzt. Um die Steifigkeit des Karosserieaufbaus und damit des Kraftfahrzeuges steigern zu können, ist es erforderlich, den Querschnitt des Längsmitteltunnels insbesondere in Fahrzeugquerrichtung auszusteifen, was durch die erfindungsgemäße vorgeschlagene Tunnelbrücke realisiert wird. Durch die beiden Schubelemente sowie die dazwischen angeordnete Tunnelbrücke kann somit ein vom einen Seitenschweller zum anderen Seitenschweller durchgängiges Schubfeld erzeugt werden, wodurch ein besonders steifer Karosserieaufbau erzielbar ist.

Zweckmäßig ist die Tunnelbrücke als Hohlprofil ausgebildet, wobei zumindest ein in Fahrzeugquerrichtung verlaufendes Versteifungselement innerhalb der Tunnelbrücke, insbesondere in der Art eines Querschottes, vorgesehen ist. Ein derartiges Querschott versteift die Tunnelbrücke zusätzlich in Fahrzeugquerrichtung und erhöht darüber hinaus eine Torsionssteifigkeit der Tunnelbrücke. Die Versteifungselemente sind dabei vorzugsweise zusammen mit der Tunnelbrücke hergestellt, sofern diese beispielsweise gegossen wird, oder in einem späteren Arbeitsschritt fest mit dieser verbunden, beispielsweise verschweißt.

Zweckmäßig ist die Tunnelbrücke an ihrem in den Längsmitteltunnel hineinragenden Ende zumindest bereichsweise konkav ausgebildet. Eine derartige konkave Ausbildung schafft einen in Fahrzeuglängsrichtung durchgängigen Hohlquerschnitt, der einerseits von dem konkav ausgebildeten Bereich der Tunnelbrücke und andererseits vom Längsmitteltunnel begrenzt ist. In diesem Hohlquerschnitt können dabei Versorgungsleitungen untergebracht werden, wobei die konkave Ausbildung des in den Längsmitteltunnel hineinragendes Endes der Tunnelbrücke zugleich eine Lagefixierung derartig durch den Hohlquerschnitt geführter Versorgungsleitungen erlaubt.

Bei einer weiteren vorteilhaften Ausführungsform der erfindungsgemäßen Lösung sind die Außenabmessungen der Tunnelbrücke an ein Innenprofil des Längsmitteltunnels angepasst, insbesondere komplementär dazu ausgebildet, so dass die Tunnelbrücke zumindest teilweise in den von unten offenen Längsmitteltunnel hineinragt und an einer Innenwandung des Längsmitteltunnels anliegt. Die angepassten Außenabmessungen der Tunnelbrücke erlauben ein passgenaues Einsetzen dieser in den Längsmitteltunnel, wodurch insbesondere die Montage erleichtert wird. Zugleich ist durch die passgenaue Anlage der Tunnelbrücke an die Innenfläche des Längsmitteltunnels eine nahezu spielfreie Übertragung von Kräften möglich, wodurch eine besonders hohe Aussteifungswirkung erzielbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Teilansicht von oben auf einen erfindungsgemäßen Karosserieaufbau
- Fig. 2: eine Ansicht von unten auf plattenförmge Schubelemente sowie eine Tunnelbrücke
- Fig. 3: einen Schnitt nach der Linie III-III der Fig. 1 in größerer Darstellung
- Fig. 4: einen Schnitt nach der Linie IV-IV der Fig. 1 in größerer Darstellung
- Fig. 5: eine perspektivische Ansicht beider plattenförmigen Schubelemente sowie der Sitzquerträger
- Fig. 6a, 6b: unterschiedliche perspektivische Ansichten auf die plattenförmigen Schubelemente sowie die Tunnelbrücke
- Fig. 7: eine teilweise geschnittene Darstellung des Karosserieaufbaus mit der Tunnelbrücke

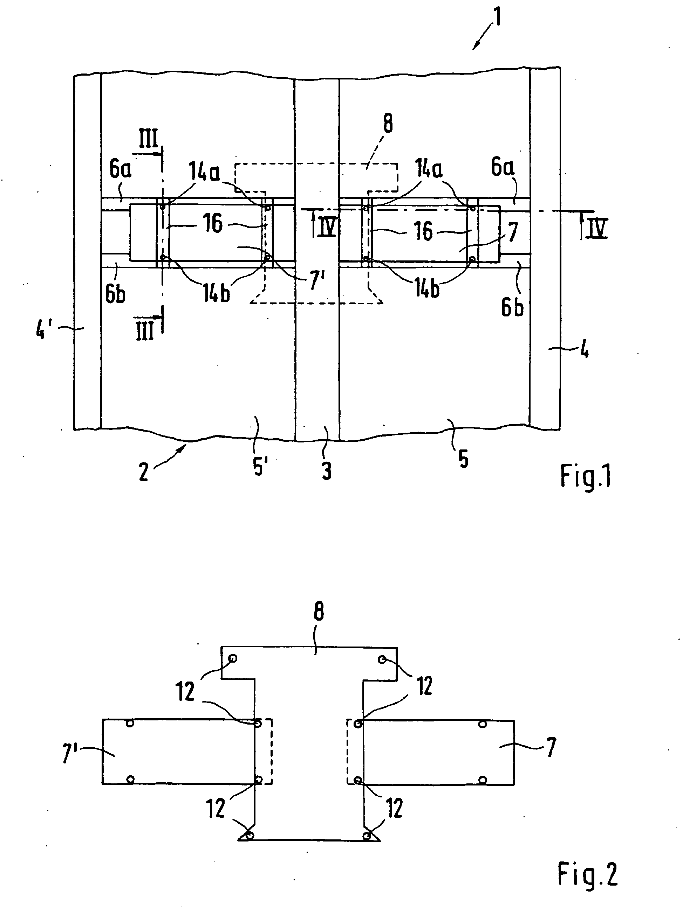

Entsprechend Fig. 1 weist ein erfindungsgemäßer Karosserieaufbau 1 für ein im übrigen nicht dargestelltes Kraftfahrzeug eine Bodengruppe 2 auf, welche im wesentlichen aus einem Längsmitteltunnel 3, zwei seitlich dazu angeordnete und parallel zum Längsmitteltunnel 3 verlaufenden Seitenschwellern 4 und 4' sowie Bodenelementen 5 und 5' besteht. Der Längsmitteltunnel 3 verläuft dabei in üblicher Weise parallel zu einer Fahrzeuglängsrichtung zwischen den beiden Bodenelementen 5 und 5'. Die Bodenelemente 5 und 5' sind dabei jeweils einenends am Längsmitteltunnel 3 und anderenends am zugehörigen Seitenschweller 4, 4' fest angebunden.

In Fahrzeugquerrichtung erstreckt sich sowohl fahrerseitig als auch beifahrerseitig ein in Fahrtrichtung gesehen vorderer sowie ein hinterer Sitzquerträger 6a und 6b (vgl. Fig. 1, 3 und 5), welche auf dem zugehörigen Bodenelement 5 bzw. 5' aufliegen bzw. fest mit diesem verbunden sind. Um eine möglichst hohe Aussteifung des Karosserieaufbaus 1 erzielen zu können, sind die fahrer- und/oder beifahrerseitigen Sitzquerträger 6a und 6b jeweils in ihren oberen Bereichen über ein plattenförmiges Schubelement 7,7' miteinander verbunden, wodurch aus dem Schubelement 7,7' den beiden Sitzquerträgern 6a und 6b sowie dem zugehörigen Bodenelement 5 bzw. 5' ein torsions- bzw. schubsteifer Hohlquerschnitt gebildet wird. Das jeweilige Schubelement 7,7' kann dabei einenends an den Längsmitteltunnel 3 und anderenends an den zugehörigen Seitenschweller 4,4' angebunden sein, wodurch sich zusätzlich eine Aussteifung des Karosserieaufbaus 1 ergibt. Die sich in Fahrzeugquerrichtung erstreckenden Enden beider Schubelemente 7, 7' können auch mit seitlichem Abstand zum Längsmitteltunnel 3 bzw. zum Seitenschweller 4, 4' angeordnet sein. Der erfindungsgemäße Karosserieaufbau 1 bildet ein schubsteifes Feld, welches die Karosserie sowohl in Fahrzeuglängs- als auch in Fahrzeugquerrichtung aussteift, ebenso wie gegenüber eventuell auftretenden Torsionsmomenten.

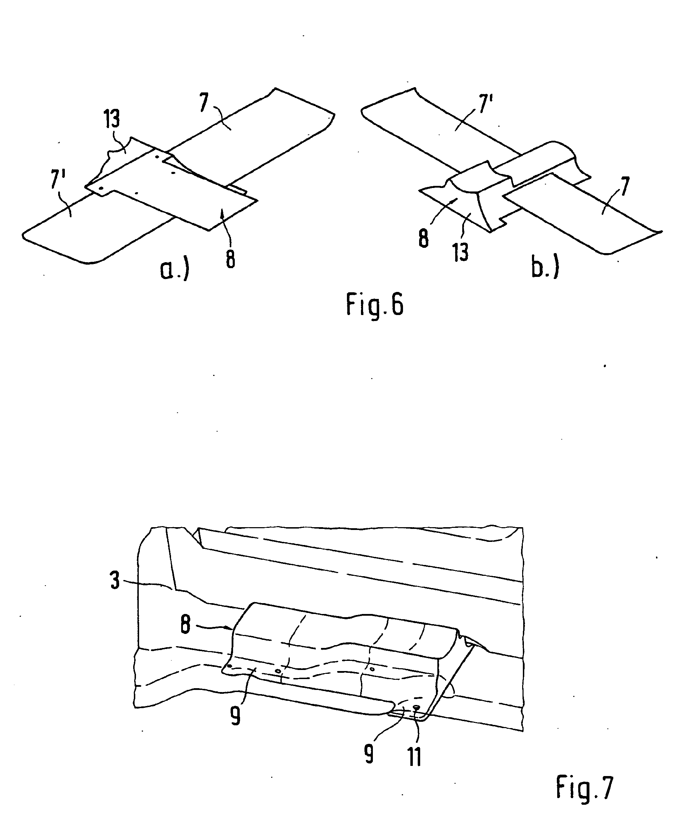

Wie der Fig. 1 zu entnehmen ist, ist im Bereich zwischen den fahrer- und beifahrerseitigen Schubelementen 7,7' der Längsmitteltunnel 3 angeordnet, welcher insbesondere in Fahrzeugquerrichtung aufgrund seines im Querschnitt U-förmigen und nach unten offenen Profils eine Schwachstelle bilden kann. Aus diesem Grund ist eine Tunnelbrücke 8 vorgesehen, welche den Längsmitteltunnel 3 quert und so zusammen mit den beiden Schubelementen 7,7' ein vom einen zum anderen Seitenschweller 4,4' reichendes, durchgängiges Schubfeld erzeugt. Dies ist beispielsweise in den Fig. 6a und 6b dargestellt, in welchen die Tunnelbrücke 8 sowie die beiden Schubelemente 7,7' isoliert dargestellt sind.

Die Tunnelbrücke 8 kann in einfacher Weise von unten in den Längsmitteltunnel 3 eingesetzt werden und über Flansche 9 mit seitlichen Rändern 10 des Längsmitteltunnels 3 verschraubt werden. Zur Befestigung der Tunnelbrücke 8 am Karosserieaufbau 1 weist diese deshalb zumindest einen Flansch 9 auf, welcher bei in ihrer Einbaulage befindlicher Tunnelbrücke 8 von unten an die seitlichen Ränder 10 des Längsmitteltunnels 3 anliegt. Dabei sind im Flansch 9 Durchgangsöffnungen 11 vorgesehen, durch welche beispielsweise Schraubmittel zur Befestigung der Tunnelbrücke 8 an dem Karosserieaufbau 1 geführt und mit letzteren verschraubt werden können. Die Schraubmittel für die Tunnelbrücke 8 sind durch das Bezugszeichen 12 angedeutet. Um die Aussteifungswirkung optimieren zu können, ist dabei die Tunnelbrücke 8 als Hohlprofil ausgebildet und weist Außenabmessungen auf, die an ein Innenprofil des Längsmitteltunnels 3 derart angepasst sind, dass die Tunnelbrücke 8 zumindest teilweise in den von unten offenen Längsmitteltunnel 3 hineinragt und an einer Innenwandung des Längsmitteltunnels 3 vorzugsweise flächig anliegt. Zusätzlich können an der als Hohlprofil ausgebildeten Tunnelbrücke 8 ein oder mehrere Versteifungselemente 13 vorgesehen sein, welche insbesondere als sog. Querschotts ausgebildet sind und welche sich in Fahrzeugquerrichtung erstrecken. Diese Querschotts bewirken eine deutliche Versteifung der Tunnelbrücke 8.

Ebenso wichtig für eine hohe Steifigkeit der Tunnelbrücke 8 ist eine entsprechende Materialauswahl, so dass die Tunnelbrücke 8 beispielsweise aus Leichtmetall, insbesondere aus Aluminium ausgebildet sein kann, wodurch neben der erhöhten Steifigkeit zugleich ein geringes Gewicht erreicht werden kann. Sinngemäß gilt gleiches auch für die beiden Schubelemente 7,7'.

Da im Längsmitteltunnel 3 üblicherweise Versorgungsleitungen und/oder Antriebselemente geführt werden, kann die Tunnelbrücke 8 an ihrem in den Längsmitteltunnel 3 hineinragenden Ende zumindest bereichsweise konkav ausgebildet sein, so dass sich mit diesem konkav ausgebildeten Bereich der Tunnelbrücke 8 und dem Längsmitteltunnel 3 ein in Längsrichtung des Kraftfahrzeugs offener Durchgangsquerschnitt ergibt, welcher ein Durchführen von Versorgungsleitungen bzw. Antriebselementen ermöglicht.

Die Befestigung der Tunnelbrücke 8 im Längsmitteltunnel 3 kann nicht nur über einen Flansch 9, sondern über mehrere Flansche 9 bzw. 9' erfolgen, welche gemäß einer besonders bevorzugten Ausführungsform in zwei Ebenen zueinander angeordnet sind, wobei der Flansch 9' beispielsweise rampenartig ausgebildet ist und an einer komplementär dazu verlaufenden Stufe im Inneren des Längsmitteltunnels 3 anliegt. Eine

Befestigung der Flansche 9 bzw. 9' und damit der Tunnelbrücke 8 im Längsmitteltunnel 3 erfolgt üblicherweise über eine Verschraubung.

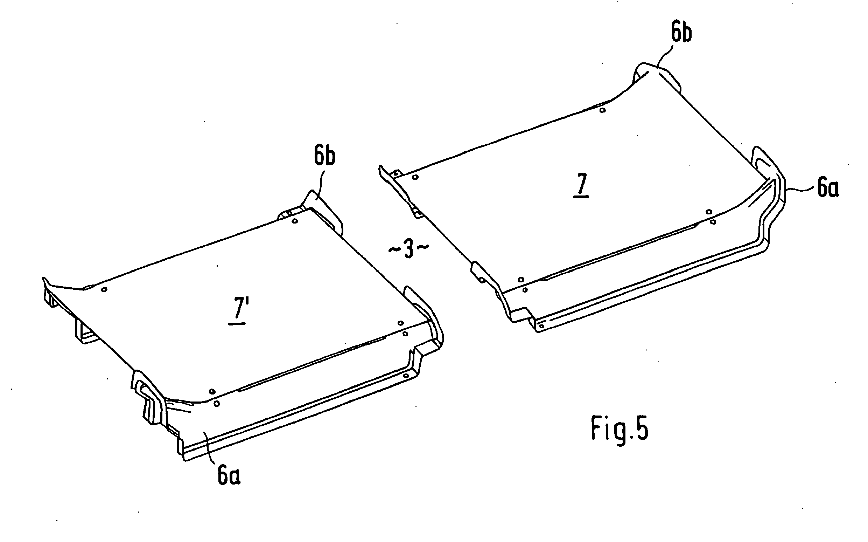

Selbstverständlich kann je nach Bauform auch vorgesehen sein, dass sich die Schubelemente 7,7', wie dies beispielsweise in Fig. 5 gezeigt ist, an zumindest einem, hier einem Seitenschweller 4 bzw. 4' zugewandten Ende gewölbt ausgebildet sind. Im Übrigen weisen sie jedoch die o.g. plattenartige Form auf, welche die charakteristisch erhöhte Schubsteifigkeit bewirkt.

Durch den erfindungsgemäßen Karosserieaufbau 1 ist es somit möglich, ein damit ausgestattetes Kraftfahrzeug nicht nur in Fahrzeugquerrichtung, sondern auch in Fahrzeuglängsrichtung zu versteifen sowie insbesondere eine Erhöhung einer Torsionssteifigkeit zu bewirken, wozu lediglich wenige zusätzliche Elemente, wie beispielsweise die Schubelemente 7,7' sowie die Tunnelbrücke 8 erforderlich sind.

Jedes Schubelement 7, 7' ist mit dem vorderen Sitzquerträger 6a und dem hinteren Sitzquerträger 6b an zumindest zwei - in Fahrzeugquerrichtung gesehen - beabstandet angeordneten Befestigungsstellen 14a, 14 b über lösbare Befestigungselemente 15 (Befestigungsschrauben) verbunden.

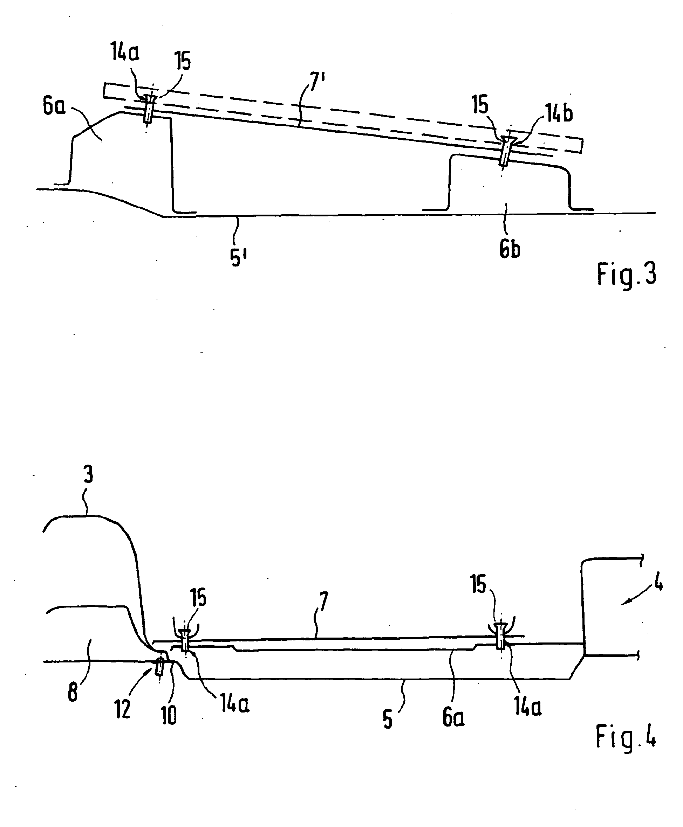

Gemäß den Fig. 3 und 4 sind mittels der lösbaren Befestigungselemente 15 neben den Schubelementen 7, 7' gleichzeitig aufbauseitige Sitzschienen 16 befestigt, die sich in Fahrzeuglängsrichtung erstrecken und auf die obere Seite der Schubelemente 7, 7' aufgesetzt sind.

## Patentansprüche

1. Karosserieaufbau (1) für ein Kraftfahrzeug mit einer Bodengruppe (2), bestehend aus einem nach oben konvexen und nach unten offenen Längsmitteltunnel (3) sowie zwei dazu parallelen Seitenschwellern (4,4'), wobei zwischen dem Längsmitteltunnel (3) und den Seitenschwellern (4,4') Bodenelemente (5,5') angeordnet sind und wobei jeweils fahrer- und beifahrerseitig zumindest ein in Fahrtrichtung gesehen vorderer und ein hinterer sich in Fahrzeugquerrichtung erstreckender und auf dem zugehörigen Bodenelement (5,5') aufliegender Sitzquerträger (6a, 6b) vorgesehen ist, **dadurch gekennzeichnet dass** fahrer- und beifahrerseitig jeweils ein auf dem vorderen sowie dem hinteren Sitzquerträger (6a, 6b) aufliegendes und daran befestigtes plattenförmiges, Schubelement (7, 7') vorgesehen ist, das zusammen mit den beiden Sitzquerträgern (6a, 6b) und dem zugehörigen Bodenelement (5, 5') eine einen Hohlquerschnitt aufweisende steife Torsionsbox bildet und dass im Bereich zwischen den fahrer- und beifahrerseitigen Schubelementen (7,7') eine Tunnelbrücke (8) vorgesehen ist, welche den Längsmitteltunnel (3) quert und so zusammen mit den Schubelementen (7) ein vom einen zum anderen Seitenschweller (4,4') reichendes, durchgängiges Schubfeld erzeugt.

2. Karosserieaufbau nach Anspruch 1, **dadurch gekennzeichnet, dass** die Tunnelbrücke (8) als Hohlprofil ausgebildet ist, wobei die Außenabmessungen der Tunnelbrücke (8) an ein Innenprofil des Längsmitteltunnels (3) angepasst sind, so dass die Tunnelbrücke (8) zumindest teilweise in den von unten offenen Längsmitteltunnel (3) hineinragt.

3. Karosserieaufbau nach Anspruch 1 oder 2, **dadurch gekennzeichnet, dass** die Tunnelbrücke (8) wenigstens einen Flansch (9) aufweist, welcher bei sich in ihrer Einbaulage befindlicher Tunnelbrücke (8) von unten an seitlichen Rändern (10) des Längsmitteltunnels (3) anliegt.

4. Karosserieaufbau nach Anspruch 3, **dadurch gekennzeichnet, dass** zwei Ebenen von Flanschen (9,9') vorgesehen sind, wobei zumindest ein Flansch (9') rampenartig ausgebildet ist und an einer komplementär dazu verlaufenden Stufe im Inneren des Längsmitteltunnels (3) anliegt.

5. Karosserieaufbau nach Anspruch 3 oder 4, **dadurch gekennzeichnet, dass** die Tunnelbrücke (8) über den Flansch (9,9') mit den seitlichen Längsrändern (10) des Längsmitteltunnel (3) verschraubt ist.

6. Karosserieaufbau nach einem der Ansprüche 1 bis 5, **dadurch gekennzeichnet, dass** an der hohl ausgebildeten Tunnelbrücke (8) zumindest ein in Fahrzeugquerrichtung verlaufendes Versteifungselement (13), insbesondere ein Querschott angeordnet ist.

7. Karosserieaufbau nach einem der Ansprüche 1 bis 6, **dadurch gekennzeichnet, dass** die Tunnelbrücke (8) an ihrem in den Längsmitteltunnel (3) hineinragenden Ende zumindest bereichsweise konkav ausgebildet ist.

8. Karosserieaufbau nach einem der Ansprüche 1 bis 7, **dadurch gekennzeichnet, dass** die Tunnelbrücke (8) und/oder die Schubelemente (7,7') aus Leichtmetall, insbesondere aus Aluminium ausgebildet sind/ist.

9. Karosserieaufbau nach Anspruch 1, **dadurch gekennzeichnet, dass** jedes Schubelement (7, 7') mit dem vorderen Sitzquerträger (6a) und dem hinteren Sitzquerträger (6b) über jeweils zumindest zwei lösbare Befestigungselemente (15) verbunden ist.

10. Karosserieaufbau nach Anspruch 1 oder 9, **dadurch gekennzeichnet, dass** jedes Schubelemente (7, 7') einenends an den Mitteltunnel (3) und andernends an den zugehörigen Seitenschweller (4, 4') angebunden sein kann.

## Claims

1. Motor vehicle bodywork (1), with a floor assembly (2), comprising an upwardly convex and downwardly open longitudinal centre tunnel (3) and two side sills (4, 4') parallel thereto, wherein floor elements (5, 5') are arranged between the longitudinal centre tunnel (3) and the side sills (4, 4'), and wherein the driver's side and passenger's side are each provided with at least one front and one rear seat crossmember (6a, 6b), seen in the direction of travel, the seat crossmembers extending in the transverse direction of the vehicle and resting on the associated floor element (5, 5'), **characterized in that** a respective plate-like thrust element (7, 7') is provided on the driver's side and passenger's side, said thrust element (7, 7') resting on the front and the rear seat crossmember (6a, 6b) and being fastened thereto, and, together with the two seat crossmembers (6a, 6b) and the associated floor element (5, 5'), forming a rigid torsion box having a hollow cross section, and **in that** a tunnel bridge (8) is provided in the region between the driver's side and passenger's side thrust elements (7, 7'), said tunnel bridge crossing the longitudinal centre tunnel (3) and thus, together with the thrust elements (7), producing a continuous thrust zone which reaches from one to the other side sill (4, 4').

2. Bodywork according to Claim 1, **characterized in that** the tunnel bridge (8) is designed as a hollow profile, with the external dimensions of the tunnel bridge (8) being matched to an internal profile of the longitudinal centre tunnel (3) such that the tunnel bridge (8) projects at least partially into the downwardly open longitudinal centre tunnel (3).

3. Bodywork according to Claim 1 or 2, **characterized in that** the tunnel bridge (8) has at least one flange (9) which, when the tunnel bridge (8) is in its fitted position, bears from below against lateral edges (10) of the longitudinal centre tunnel (3).

4. Bodywork according to Claim 3, **characterized in that** two planes of flanges (9, 9') are provided, at least one flange (9') being of ramp-like design and bearing against a step, which runs in a complementary manner with respect thereto, in the interior of the longitudinal centre tunnel (3).

5. Bodywork according to Claim 3 or 4, **characterized in that** the tunnel bridge (8) is screwed to the lateral longitudinal edges (10) of the longitudinal centre tunnel (3) via the flange (9, 9').

6. Bodywork according to one of Claims 1 to 5, **characterized in that** at least one reinforcing element (13) running in the transverse direction of the vehicle, in particular a transverse bulkhead, is arranged on the tunnel bridge (8) which is of hollow design.

7. Bodywork according to one of Claims 1 to 6, **characterized in that** the tunnel bridge (8), at its end projecting into the longitudinal centre tunnel (3), is of concave design at least in some regions.

8. Bodywork according to one of Claims 1 to 7, **characterized in that** the tunnel bridge (8) and/or the thrust elements (7, 7') is/are formed from light metal, in particular from aluminium.

9. Bodywork according to Claim 1, **characterized in that** each thrust element (7, 7') is connected to the front seat crossmember (6a) and to the rear seat crossmember (6b) via at least two releasable fastening elements (15) in each case.

10. Bodywork according to Claim 1 or 9, **characterized in that** each thrust element (7, 7') can be connected at one end to the centre tunnel (3) and at the other end to the associated side sill (4, 4').

## Revendications

1. Structure de carrosserie (1) pour un véhicule automobile avec un plancher de caisse (2), se composant d'un tunnel central longitudinal (3) convexe vers le haut et ouvert vers le bas ainsi que de deux seuils de porte latéraux (4, 4') parallèles à celui-ci, dans laquelle des éléments de plancher (5, 5') sont disposés entre le tunnel central longitudinal (3) et les seuils de porte latéraux (4, 4') et dans laquelle il est chaque fois prévu, du côté du conducteur et du côté du passager, au moins un support transversal de siège (6a, 6b), respectivement avant et arrière par rapport à la direction de déplacement, qui s'étend dans la direction transversale du véhicule et qui repose sur l'élément de plancher correspondant (5, 5'), **caractérisée en ce qu'**il est chaque fois prévu, du côté du conducteur et du côté du passager, un élément de poussée en forme de plaque (7, 7'), appliqué respectivement sur le support transversal de siège avant et arrière (6a, 6b) et fixé à ceux-ci, qui forme avec les deux supports transversaux de siège (6a, 6b) et l'élément de plancher correspondant (5, 5') un caisson de torsion rigide présentant une section transversale creuse, et **en ce qu'**il est prévu dans la région située entre les éléments de poussée (7, 7') du côté du conducteur et du côté du passager, un pont de tunnel (8) qui croise le tunnel central longitudinal (3) et produit ainsi, avec les éléments de poussée (7), un champ de poussée continu allant d'un seuil de porte latéral à l'autre (4, 4').

2. Structure de carrosserie selon la revendication 1, **caractérisée en ce que** le pont de tunnel (8) se présente sous la forme d'un profilé creux, dans laquelle les dimensions extérieures du pont de tunnel (8) sont adaptées à un profil intérieur du tunnel central longitudinal (3), de telle manière que le pont de tunnel (8) pénètre au moins partiellement dans le tunnel central longitudinal ouvert vers le bas (3).

3. Structure de carrosserie selon la revendication 1 ou 2, **caractérisée en ce que** le pont de tunnel (8) présente au moins une aile (9), qui est appliquée par dessous sur des bords latéraux (10) du tunnel central longitudinal (3) lorsque le pont de tunnel (8) se trouve dans sa position de montage.

4. Structure de carrosserie selon la revendication 3, **caractérisée en ce qu'**il est prévu deux plans d'ailes (9, 9'), dans laquelle au moins une aile (9') est réalisée en forme de rampe et s'applique sur un degré qui est complémentaire à celle-ci à l'intérieur du tunnel central longitudinal (3).

5. Structure de carrosserie selon la revendication 3 ou 4, **caractérisée en ce que** le pont de tunnel (8) est vissé sur les bords latéraux longitudinaux (10) du tunnel central longitudinal (3) par l'intermédiaire de l'aile (9, 9').

6. Structure de carrosserie selon l'une quelconque des revendications 1 à 5, **caractérisée en ce qu'**au moins un élément de renforcement (13) s'étendant dans la direction transversale du véhicule, en particulier une cloison transversale, est disposé sur le pont de tunnel (8) de forme creuse.

7. Structure de carrosserie selon l'une quelconque des revendications 1 à 6, **caractérisée en ce que** le pont de tunnel (8) est au moins localement de forme concave à son extrémité pénétrant dans le tunnel central longitudinal (3).

8. Structure de carrosserie selon l'une quelconque des revendications 1 à 7, **caractérisée en ce que** le pont de tunnel (8) et/ou les éléments de poussée (7, 7') est/sont réalisé(s) en métal léger, en particulier en aluminium.

9. Structure de carrosserie selon la revendication 1, **caractérisée en ce que** chaque élément de poussée (7, 7') est assemblé respectivement au support transversal de siège avant (6a) et au support transversal de siège arrière (6b) au moyen d'au moins deux éléments de fixation amovibles (15).

10. Structure de carrosserie selon la revendication 1 ou 9, **caractérisée en ce que** chaque élément de poussée (7, 7') peut être assemblé par une extrémité au tunnel central (3) et par l'autre extrémité au seuil de porte latéral correspondant (4, 4').
